# EUROPEAN PATENT SPECIFICATION

(11) **EP 2 052 822 B1**
(45) Date of publication and mention of the grant of the patent: **09.01.2013**
(21) Application number: 08167287.5
(22) Date of filing: 22.10.2008
(51) Int. Cl.: B27D 5/00

(54) **Edge-banding method and apparatus**
Kantenanleimverfahren und -vorrichtung
Procédé et appareil d'emboîture

(30) Priority: 22.10.2007 IT MO20070324
(43) Date of publication of application: 29.04.2009
(73) Proprietor: SCM Group S.p.A., 47921 Rimini (RN) (IT)
(72) Inventor: Neri, Alessandro, 47922 Rimini (RN) (IT)
(74) Representative: Crugnola, Pietro

(56) References cited:
- EP-A- 0 704 285
- EP-A- 0 733 450
- EP-A- 1 640 128
- WO-A-01/36168
- GB-A- 1 072 371

## Description

The invention relates to a method and an apparatus for edgebanding a panel, according to the preambles of claim 1 and claims 10. Such a method and apparatus are known from document EP 1 640 128 A1.

Composite panels with a light structure are known, for example used for making furniture, shelving, shelves, doors and the like, provided with a layered or "sandwich" structure.

This structure comprises an intermediate layer interposed between a first external layer and a second external layer, that are substantially flat and mutually opposite, and are made of wood or similar materials.

The intermediate layer is made of a filling material, made of wood or similar materials, such as, for example, sheets of cardboard having a honeycomb structure that is lighter and less resistant than the material used to make the first and the second external layer.

Such panels are further provided, at the edge portions thereof, with a longitudinal groove, for example having a trapezoidal or rectangular-shaped cross section, obtained by suitably milling the edge portions, in particular by milling the intermediate layer, the first external layer and the second external layer.

This groove extends from the intermediate layer up to the first and the second external layer, on internal sides of which notches are formed that are opposite one another.

Such notches are arranged, in use, to act as stop seats for a supporting element, or list, arranged for being received in the aforesaid groove.

The supporting element, made of wood or similar materials, has a cross section with a shape that is the same as that of the groove and is arranged for reinforcing and strengthening the edge portions of the panel and for supporting an edge element made of plastics or similar materials.

In particular, the edge element, in use, is supported by and abuts on an abutting surface of the panel defined by a first face of the supporting element, opposite a second face of the supporting element facing a bottom wall of the aforesaid groove, and by respective head surfaces of the first and of the second external layer, the first face and the head surfaces facing the edge element.

In order to edgeband the composite panels disclosed above, a method is known comprising above all cutting to size, by a first milling apparatus, a suitably previously assembled panel.

Subsequently, milling, by a second milling apparatus, the edge portions of the panel is provided to obtain the aforesaid groove, after which inserting and gluing, by a first edgebanding apparatus, the supporting element in the groove is provided.

This first edgebanding apparatus comprises a first glue distributing element arranged for distributing a first layer of glue on respective side surfaces of the aforesaid supporting element and a first pressing roller that presses and inserts the supporting element into the groove.

Still subsequently, grinding the abutting surface by a grinding apparatus is provided, after which, gluing the edge element to the abutting surface by a second edgebanding apparatus is provided.

This second edgebanding apparatus comprises a second glue distributing element arranged for distributing a second layer of glue on an active surface of the edge element facing the aforesaid abutting surface, and a second pressing roller that presses the edge element on the abutting surface.

Still subsequently, an upper part and a lower part of the edge element protruding from the abutting surface are removed by a trimming apparatus, a connecting radius between the edge element applied on the abutting surface of the panel and the respective external surfaces of the first and of the second external layer is made by an edging apparatus, and lastly, the profile of the edge element is rounded by a rounding/profiling apparatus after the edge element has been applied to the panel.

A drawback of this method is that it is extremely slow and laborious to apply, which implies low productivity with a consequent loss of money.

This is essentially due to the considerable number of operations to be performed.

A further drawback of this method is that it requires at least two edgebanding apparatuses to be applied, in addition to a grinding apparatus, which entails an increase in the expenses to be sustained connected therewith, such as the purchase and maintenance cost thereof.

Further, in particular in the case of machinings on panels made on line, this entails the need to have a sufficiently large environment available for receiving the apparatuses required to apply the aforesaid method.

EP1640128 discloses a method for gluing edge material to lightweight building boards having two thin-walled covering layers and a core layer made of light filling material and arranged between the covering layers, wherein one narrow side of the lightweight building board is machined in preparation for the gluing process and following a supporting edge and a decorative edge are attached in such a manner that firstly the decorative edge and the supporting edge are glued together and following this both edges are glued jointly onto the prepared narrow side of the lightweight building boards.

An object of the invention is to improve the methods for edgebanding a panel made of wood or similar materials, in particular a composite panel with a light structure.

A further object is to provide a method for edgebanding panels that is faster and simpler to perform than known methods.

Another object is to improve the edgebanding apparatuses arranged for edgebanding a panel made of wood or similar materials, in particular a composite panel with a light structure.

In a first aspect of the invention there is provided a method for edgebanding a panel made of wood or similar materials as defined in claim 1.

Owing to this aspect of the invention, it is possible to obtain a method for edgebanding a panel that is particularly easy, fast and cheap to apply.

In fact, in this method, said edge element is fixed to said supporting element substantially whilst said supporting element is inserted into said seat means.

This makes particularly easy to edgeband panels with a curvilinear edge portion having a narrow curvature radius.

In fact, in an inserting step for inserting said supporting element into said seat means, as said edge element is fixed to said supporting element whilst said supporting element is inserted into said seat means, a reciprocal sliding is permitted between said supporting element and said edge element and it is possible, owing to the flexibility of said edge element and of said supporting element, to flex easily said supporting element and said edge element, so as to reproduce accurately a profile of said edge portion and possibly eliminate the possibility that residual tensions are created between said panel, said supporting element and said edge element that could compromise the aesthetic quality of the edgebanding.

Also, this method enables the laborious grinding operation to be eliminated that made known methods particularly slow and difficult to apply.

In particular, this enables a grinding apparatus that is used in known methods to be eliminated, with consequent reduction of costs and of the overall dimensions of an apparatus that is usable for applying this method.

In a second aspect of the invention there is provided an edgebanding apparatus for fixing an edge element to an edge portion of a panel made of wood or similar materials as defined in claim 10.

Owing to the second aspect of the invention, it is possible to obtain a single edgebanding apparatus that both enables said edge element to be fixed on said supporting element and said supporting element to be inserted into said seat means.

This enables a single edgebanding apparatus to be used compared with the two edgebanding apparatuses used in known methods, with a consequent reduction of overall dimensions and containment of costs.

The invention can be better understood and implemented with reference to the attached drawings that illustrate some embodiments thereof by way of non-limiting example, in which:
Figures 1 to 4 illustrate the steps of a method for edgebanding a panel;
Figure 5 is an exploded view of Figure 4;
Figure 6 is a side view of a supporting element included in the panel in Figure 5;
Figure 7 is a schematic top view of a first embodiment of an edgebanding apparatus arranged for edgebanding panels;
Figure 8 is a perspective view of the edgebanding apparatus in Figure 7;
Figure 9 is a schematic top view of a second embodiment of the apparatus in Figure 7;
Figure 10 is a schematic and fragmentary top view of an edge zone of the panel in Figure 4 in a first configuration;
Figure 11 is an enlarged detail of Figure 10;
Figure 12 is a further enlarged detail of Figure 10;
Figure 13 is a schematic and fragmentary top view of an edge zone of the panel in Figure 4 in a second configuration;
Figure 14 is an enlarged detail of Figure 13;
Figure 15 is a further enlarged detail of Figure 13.

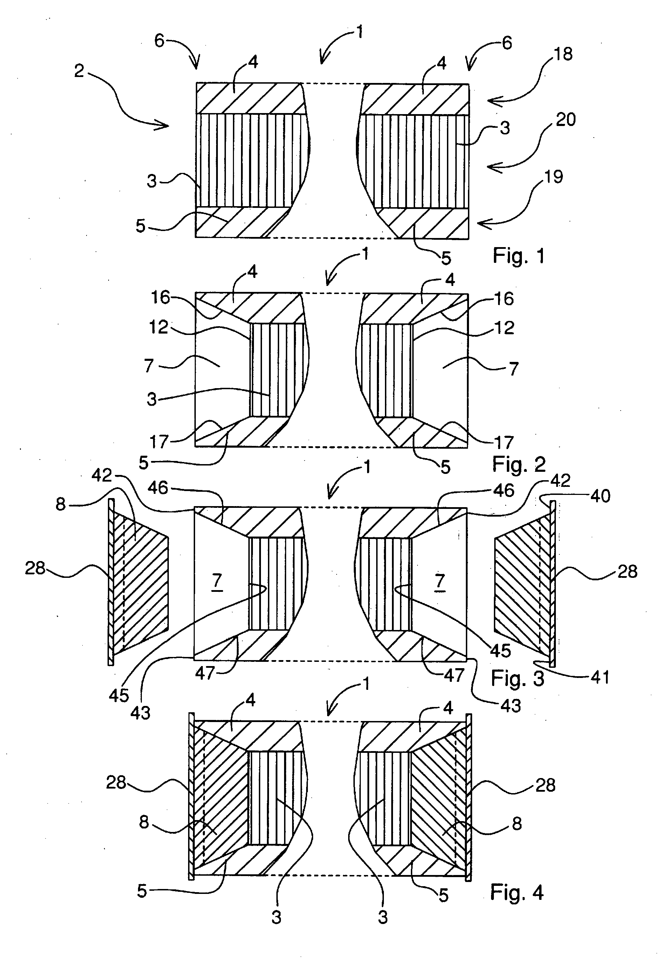

With reference to Figures 1 to 5, there is shown a panel 1 that is usable for making furniture, shelving, shelves, doors and the like, comprising a layered or "sandwich" structure 2.

The structure 2 comprises an intermediate layer 3 interposed between a first external layer 4 and a second external layer 5 that are substantially flat and mutually opposite, made of wood or similar materials.

The intermediate layer 3 is made with a filling material, made of wood or similar materials, such as, for example, sheets of cardboard having a honeycomb structure, that is lighter and less resistant than the material used to make the first layer 4 and the second layer 5.

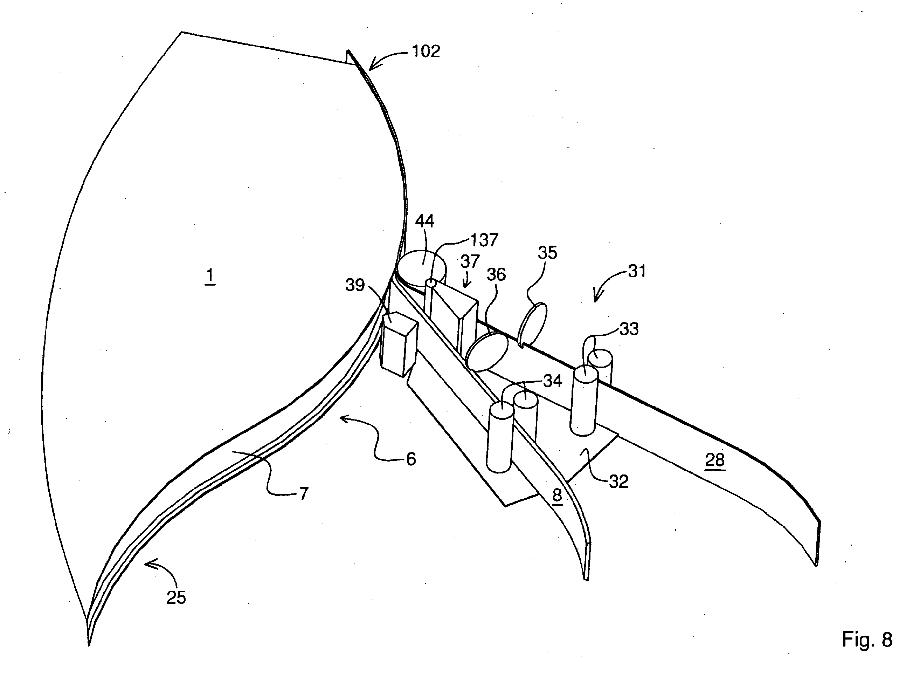

The panel 1 is further provided, at edge portions 6 thereof, with a seat 7, extending substantially longitudinally (Figures 2 and 8).

The seat 7 has a substantially trapezoidal cross section, and is obtained, as disclosed better below, by milling the edge portions 6 appropriately.

The seat 7 comprises a bottom wall 12, a first side wall 16 and a second side wall 17.

The first side wall 16 and the second side wall 17 are obtained by milling respectively a first terminal portion 18 and a second terminal portion 19 respectively of the first layer 4 and of the second layer 5, whilst the bottom wall 12 is obtained by milling a third terminal portion 20 of the intermediate layer 3 (Figure 1).

In this manner, the bottom wall 12, the first side wall 16 and the second side wall 17 consist respectively of an end wall 45 of the intermediate layer 3, of a first tilted wall 46 of the first layer 4 and of a second tilted wall 47 of the second layer 5.

In an embodiment of the invention, which is not shown, the panel 1 comprises a seat having a substantially rectangular section obtained by compressing the third terminal portion 20 of the intermediate layer 3.

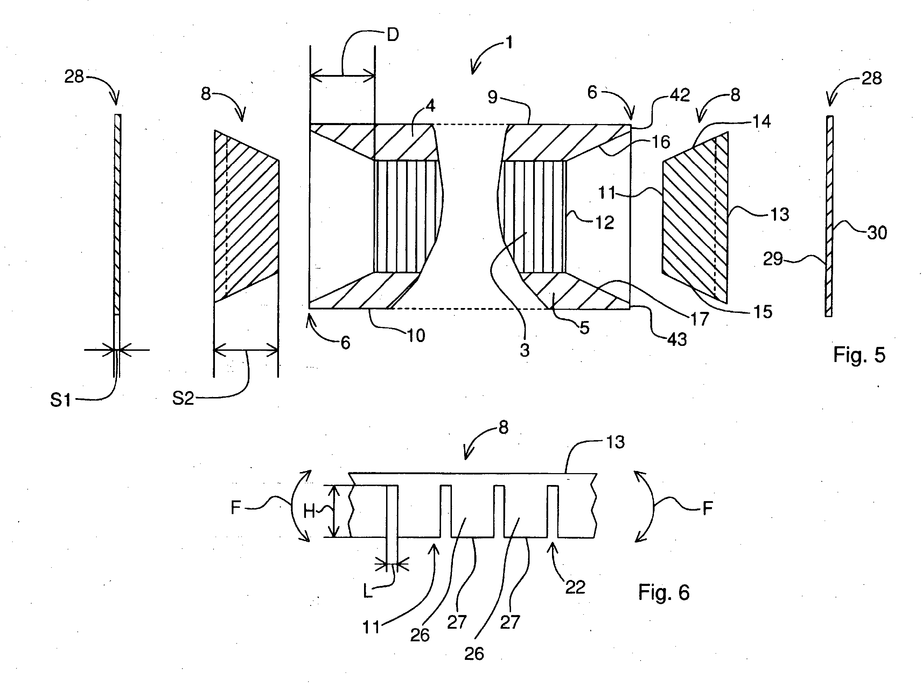

The seat 7 is arranged, in use, for receiving a supporting element 8, in the shape of a list or strip, made of wood or similar materials, having a cross section of a shape substantially the same as that of the seat 7 and arranged for reinforcing and strengthening the edge portions 6 of the panel 1 and for supporting an edge element 28 having a thickness S1 (Figure 5).

The supporting element 8 comprises a side 11 facing, and arranged for contacting, in use, the bottom wall 12, a further side 13 opposite the side 11, a first side surface 14 and a second side surface 15, which are mutually opposite, facing, in use, respectively the first side wall 16 and the second side wall 17 of the seat 7.

Between the first side surface 14 and the second side surface 15, and respectively the first side wall 16 and the second side wall 17, there are defined, in use, respective gaps, which are not shown, arranged for receiving an adhesive substance, arranged for gluing the supporting element 8 to the seat 7.

In other words, between the supporting element 8 and the seat 7 there is a certain clearance.

The supporting element 8 further has a further thickness S2 that is more or less great according to whether in a first external surface 9 and/or in a second external surface 10 respectively of the first layer 4 and of the second layer 5, within a certain distance D from the edge portions 6, holes and/or millings that are not shown have to be made.

This occurs, for example, for a panel 1 intended to act as a supporting frame of a piece of furniture or for a panel 1 acting as a door.

In this case, in fact, pins can engage these holes, which pins are not shown, which pins project from the first external surface 9 and/or from the second external surface 10 and are arranged for supporting, for example, a shelf, or fixing means, which are not shown, which are arranged for fixing to the panel 1 elements such as hinges.

On the other hand, the aforesaid millings are made for acting as a guide for further panels, which are not shown, for example panels with a thin thickness arranged for acting as a bottom wall for a piece of furniture.

The supporting element 8 further comprises a plurality of notches 22, for example mutually equidistant, obtained in the side 11, for example having a parallelepipedon shape, and defining a plurality of elongated elements 26, which comprise respective ends 27 that may move towards or away from one another in function of a curvature radius of a profile portion 25 of the panel 1 contacted by the supporting element 8 (Figures 6 to 9).

In particular, the notches 22 have a width L and a height H defining a minimum curvature radius for the supporting element 8.

Owing to the notches 22 it is possible to make the supporting element 8 more flexible, which supporting element 8 can flex in the direction indicated by the arrows F to adapt better to the profile 25.

This is particularly advantageous if the supporting element 8 has a large further thickness S2 and enables the supporting element 8 to be associated with a panel 1 having a curvilinear profile 25.

In an embodiment of the invention which is not shown, the supporting element 8 is devoid of the notches 22.

The aforesaid edge element 28, made of plastics or similar materials, comprises a first face 29 facing and arranged for contacting the further side 13 of the supporting element 8 and a second face 30 opposite the first face 29.

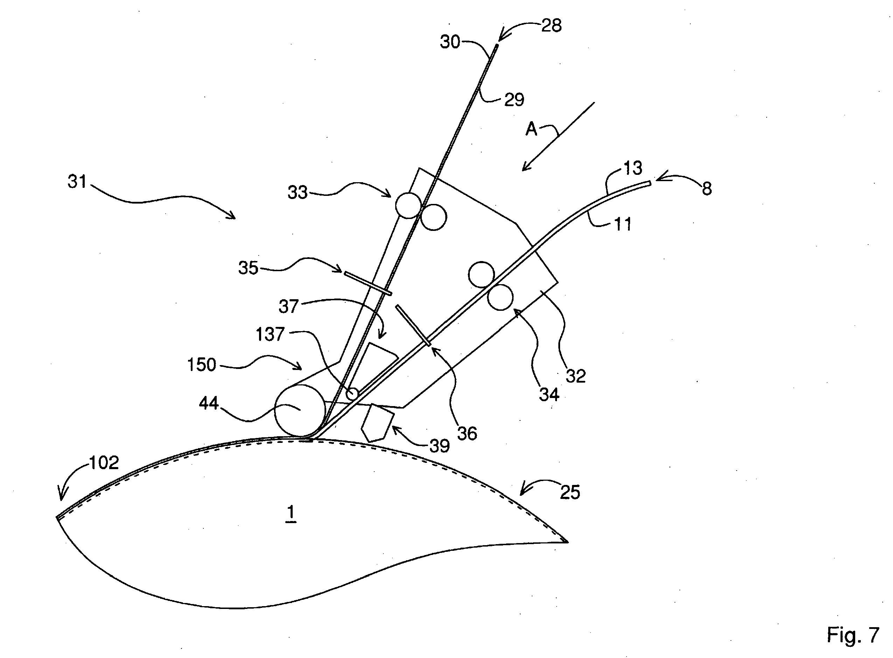

With reference to Figures 7 and 8, there is shown a edgebanding apparatus 31 arranged for fixing substantially simultaneously the edge element 28 to the supporting element 8 and the edge element 28 and the supporting element 8 to the panel 1.

The edgebanding apparatus 31 comprises a support 32 on which are mounted a first pair of rollers 33 and a second pair of rollers 34.

The first pair of rollers 33 and the second pair of rollers 34 are arranged for unwinding from respective reels, which are not shown, respectively the edge element 28 and the supporting element 8.

In particular, the first pair of rollers 33 contacts the first face 29 and the second face 30 of the edge element 28, whilst the second pair of rollers 34 contacts the side 11 and the further side 13 of the supporting element 8.

The edgebanding apparatus 31 further comprises a first blade 35 and a second blade 36 positioned respectively downstream of the first pair of rollers 34 and of the second pair of rollers 35 with respect to an advance direction A of the edge element 28 and of the supporting element 8 along the edgebanding apparatus 31 moving towards the panel 1.

The first blade 35 and the second blade 36 are arranged for cutting to a desired length respectively the edge element 28 and the supporting element 8.

In particular, the first blade 35 and the second blade 36, suitably controlled by a control and management system, which is not shown, enable the edge element 28 and the supporting element 8 to be cut to the same or different lengths.

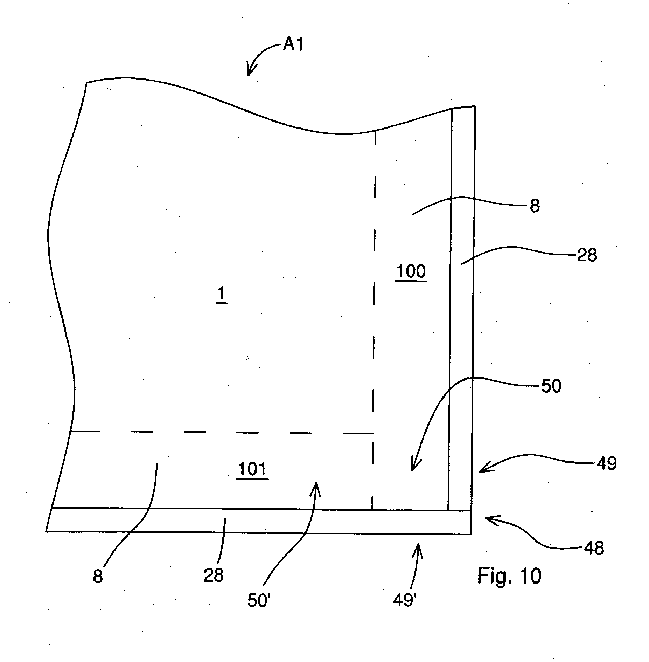

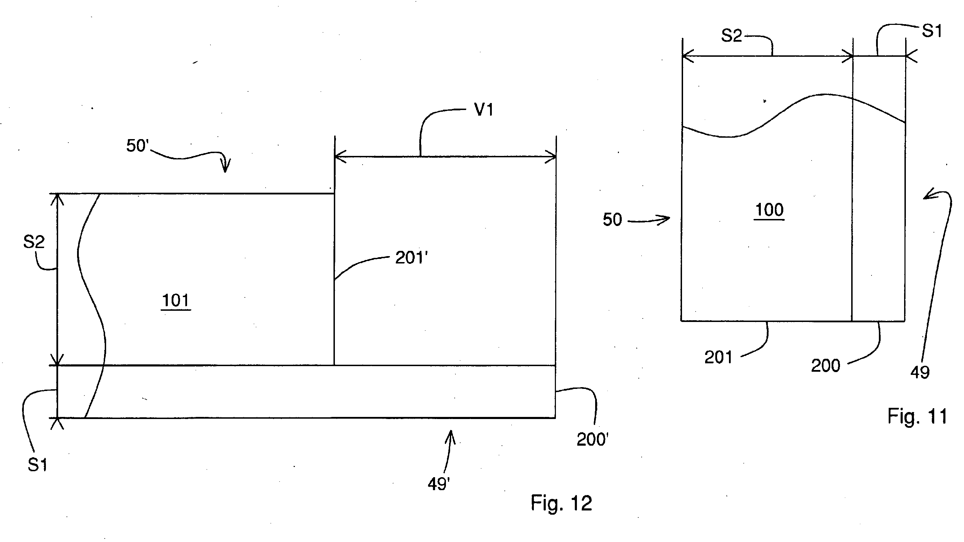

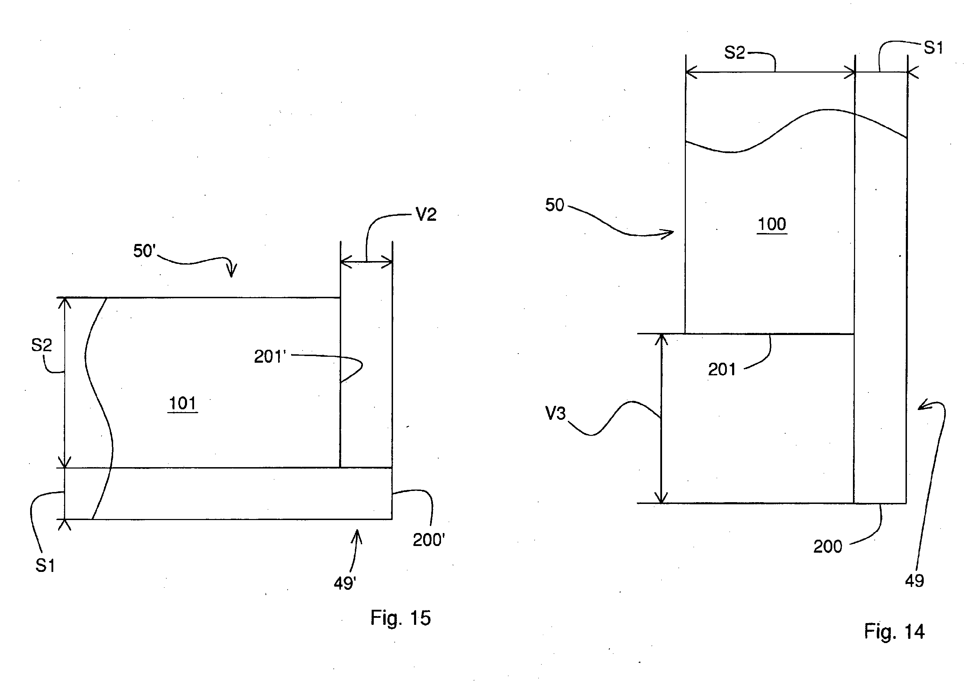

This makes particularly simple and fast to edgeband an edge zone 48 of the panel 1 (Figures 10 to 15), where the edge element 28 and the supporting element 8 may have various lengths.

In particular, the edge zone 48 is defined by a first group supporting element-edge element 100 and by a second group supporting element-edge element 101.

The first group supporting element-edge element 100 comprises a first end portion 49 provided with a first end wall 200, of the edge element 28 and a second end portion 50, provided with a second end wall 201, of the supporting element 8.

The second group supporting element-edge element 101 comprises a further first end portion 49', provided with a further first end wall 200', of the edge element 28 and a further second end portion 50', provided with a further second end wall 201', of the supporting element 8.

In Figures 10 to 12 there is shown the edge zone 48 in a first configuration A1, different from the invention.

In the first configuration A1, different from the invention the end portion 49 does not protrude from the second end portion 50 and vice versa, and the further end portion 49' protrudes from the further second end portion 50'.

In particular, in this first configuration A1 the first end wall 200 is substantially aligned on the second end wall 201, whilst the further first end wall 200' is staggered with respect to the further second end wall 201' by a first length V1 substantially equal to the sum of the thickness S1 and of the further thickness S2.

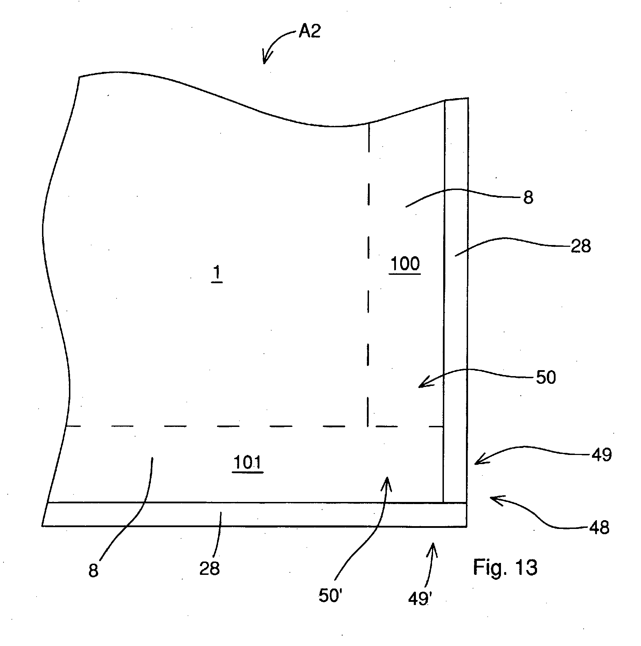

In Figures 13 to 15 there is shown the edge zone 48 in a second configuration A2 according to the invention.

In this second configuration A2, the end portion 49 and the further end portion 49' protrude respectively from the second end portion 50 and from the further second end portion 50'.

In particular, in the second configuration A2 according to the invention the further first end wall 200' is staggered with respect to the further second end wall 201' by a second length V2 substantially equal to the thickness S1 of the edge element 28, whilst the first end wall 200 is staggered with respect to the second end wall 201 by a third length V3 substantially equal to the further thickness S2 of the supporting element 8.

The edgebanding apparatus 31 further comprises a glue distributor 37, for example comprising a gluing roller 137, arranged for distributing a desired quantity of glue on the further side 13 of the supporting element 8.

In particular, the glue distributor 37 is positioned downstream of the first blade 35 and of the second blade 36 with respect to the advance direction A and is interposed between the edge element 28 and the supporting element 8.

The edgebanding apparatus 31 further comprises glue distributing means 39 positioned downstream of the glue distributor 37 with respect to the advance direction A.

The glue distributing means 39 is arranged for distributing a desired quantity of glue on the first tilted wall 46 and/or on a first head surface 42 of the first layer 4 and/or on the second tilted wall 47 and/or on a second head surface 43 of the second layer 5, the first head surface 42 and the second head surface 43 being respectively arranged for contacting a first active portion 40 and a second active portion 41 of the first face 29 of the edge element 28 exceeding in height the supporting element 8 (Figure 3).

The edgebanding apparatus 31 further comprises a pressing roller 44 that is rotatably supported by an end zone 150 of the support 32 (Figure 7).

The pressing roller 44 is arranged for fixing substantially simultaneously the edge element 28 to the supporting element 8 and the edge element 28 and the supporting element 8 to the panel 1.

In particular, the pressing roller 44 presses the edge element 28 against the supporting element 8, inserts the supporting element 8 into the seat 7, by pressing the first side surface 14 and the second side surface 15 respectively against the first side wall 16 and the second side wall 17, that act as an abutment, and presses the first active portion 40 and the second active portion 41 respectively against the first head surface 42 and the second head surface 43, that act as an abutment, so as to fix substantially simultaneously the edge element 28 to the supporting element 8 and the edge element 28 and the supporting element 8 to the panel 1.

This makes it particularly easy to edgeband the panel 1 if the curvature radius of the profile 25 is a narrow curvature radius.

In fact, in a step of inserting the supporting element 8 into the seat 7, as the edge element 28 is fixed to the supporting element 8 whilst the supporting element 8 is inserted into the seat 7, a reciprocal slide is permitted between the supporting element 8 and the edge element 28 and it is possible, owing to the flexibility of the edge element 28 and of the supporting element 8, to flex easily the supporting element 8 and the edge element 28, so as to reproduce accurately the profile 25 and possibly to eliminate the possibility that residual tensions are created between the panel 1, the supporting element 8 and the edge element 28 that could compromise the aesthetic quality of the edgebanding.

In an embodiment of the invention, which is not shown, instead of the glue distributor 37 there is provided an activating element, for example a hair dryer, or a lamp, arranged for activating a glue that is on the further side 13.

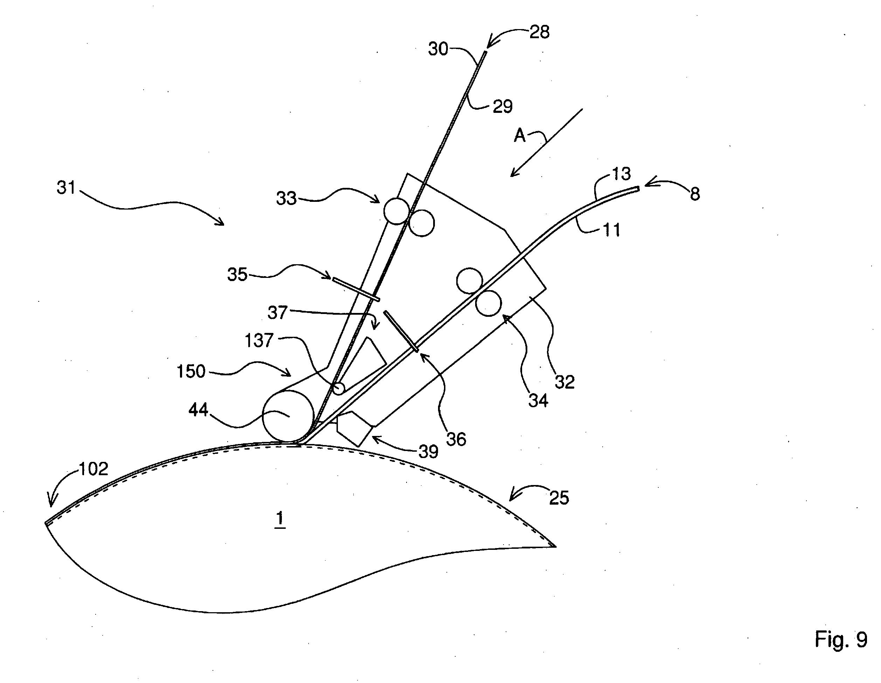

In a further embodiment of the invention, shown in Figure 9, the glue distributor 37, or the activating element, respectively distribute, or activate, a glue on the first face 29 of the edge element 28.

In this embodiment moreover, the glue distributing means 39, positioned downstream of the glue distributor 37, with respect to the advance direction A, is arranged for distributing a desired quantity of glue on the first side surface 14 and on the second side surface 15, of the supporting element 8.

In another embodiment of the invention, which is not shown, the glue distributing means 39 is arranged for activating a glue that is on the first side surface 14 and on the second side surface 15.

With reference to Figures 1 to 4 and to Figures 7 and 8, an edgebanding method for edgebanding a panel 1 of the aforesaid type is disclosed below.

This method above all comprises cutting to size the panel 1 that has been suitably assembled previously.

Subsequently, milling the edge portions 6 is provided by a suitably shaped milling tool to obtain the seat 7, in particular milling the first layer 4, the second layer 5 and the intermediate layer 3 is provided.

This milling enables the first head surface 42 and the first tilted wall 46 to be defined in the first layer 4, the second head surface 43 and the second tilted wall 47 to be defined in the second layer 5, and the end wall 45 to be defined in the intermediate layer 3.

In an embodiment of the invention, which is not shown, the third terminal portion 20 of the intermediate layer 3 is compressed to obtain a seat 7 having a substantially rectangular section.

Subsequently, the glue distributor 37, and the glue distributing means 39 distribute a desired quantity of glue respectively on the further side 13 of the supporting element 8 and on the first tilted wall 46 and/or on the first head surface 42 and/or on the second tilted wall 47 and/or on the second head surface 43.

Still subsequently, the pressing roller 44 cooperates with the first head surface 42, with the second head surface 43, with the first side wall 16 and with the second side wall 17, for fixing substantially simultaneously the supporting element 8 to the edge element 28 and the edge element 28 and the supporting element 8 to the panel 1.

In particular, the pressing roller 44 presses the first active portion 40 and the second active portion 41 respectively against the first head surface 42 and the second head surface 43 and presses the first side surface 14 and the second side surface 15 respectively against the first side wall 16 and the second side wall 17 so as to fix substantially simultaneously the edge element 28 to the supporting element 8 and fix the edge element 28 and the supporting element 8 to the panel 1.

This method further comprises cutting the edge element 28 and the supporting element 8 to a desired length, depending on the dimensions of the panel 1, by respectively the first blade 35 and the second blade 36.

In particular, the first blade 35 and the second blade 36 can cut the edge element 28 and the supporting element 8 before, or whilst, the pressing roller 44 inserts a first portion 102 of the supporting element 8 into the seat 7 and presses the first active portion 40 and the second active portion 41 respectively against the first head surface 42 and the second head surface 43.

Still subsequently, the usual and known finishing operations are performed on the edge element 28.

It should be noted how the edgebanding method disclosed above is particularly easy, fast and cheap to apply.

In fact, with this method the edge element 28 is fixed to the supporting element 8 whilst the supporting element 8 is inserted into the seat 7, which, as disclosed above, makes particularly easy to edgeband panels with a curvilinear edge portion having a narrow curvature radius.

Also, this method enables the laborious grinding operation to be eliminated that made known methods particularly slow and difficult to apply.

In particular, it enables a grinding apparatus used in known methods to be eliminated, with consequent reduction of costs and of the overall dimensions of an apparatus that is usable for applying this method.

Further, it should be noted how the edgebanding apparatus 31 enables the edge element 28 to be fixed on the supporting element 8 and the supporting element 8 to be inserted into the seat 7.

This enables only one edgebanding apparatus to be used with respect to the two edgebanding apparatuses used in the known methods, with a consequent reduction of the overall dimensions and containment of the costs.

## Claims

1. Method for edgebanding a panel (1) made of wood or similar materials comprising machining an edge portion (6) of said panel (1) for obtaining seat means (7), inserting into said seat means (7) a supporting element (8) by pressing said supporting element against said panel (1) which acts as an abutment and pressing an edge element (28) against said supporting element (8), wherein there is provided still pressing said edge element (28) against said panel (1) which acts as an abutment so as to fix substantially simultaneously said edge element (28) to said supporting element (8) and said edge element (28) and said supporting element (8) to said panel (1), said inserting, said pressing and said still pressing being performed by a pressing roller (44), wherein there is provided cutting said supporting element (8) and said edge element (28) to desired lengths, ***characterised in that*** said cutting to desired lengths comprises cutting said edge element (28) and said supporting element (8) so that an end wall (200, 200') of an end portion (49, 49') of said edge element (28) is staggered with respect to a further end wall (201, 201') of a further end portion (50, 50') of said supporting element (8) by a length (V2) substantially the same as a thickness (S1) of said edge element (28).

2. Method according to claim 1, wherein said fixing comprises gluing said edge element (28) to said supporting element (8).

3. Method according to any preceding claim, wherein said inserting comprises still gluing said supporting element (8) to said seat means (7).

4. Method according to any preceding claim, wherein said inserting comprises further gluing said edge element (28) to said panel (1).

5. Method according to any preceding claim, wherein said panel is a multilayered panel (1), said multilayered panel (1) comprising an intermediate layer (3) interposed between a first layer (4) and a second layer (5), said intermediate layer (3) being made of a lighter material than a further material used for making said first layer (4) and said second layer (5).

6. Method according to any preceding claim, wherein said machining comprises milling said edge portion (6).

7. Method according to claim 6, as claim 6 is appended to claim 5, wherein said milling said edge portion (6) comprises milling said first layer (4), said second layer (5) and said intermediate layer (3) so that a bottom wall (12) of said seat means (7) consists of an end wall (45) of said intermediate layer (3).

8. Method according to claim 6, as claim 6 is appended to claim 5, wherein said machining comprises compressing said intermediate layer (3).

9. Method according to any preceding claim, wherein said cutting to desired lengths comprises still cutting said edge element (28) and said supporting element (8) so that said end wall (200, 200') is staggered with respect to said further end wall (201, 201') by a further length (V3) that is substantially the same as a further thickness (S2) of said supporting element (8).

10. Edgebanding apparatus for fixing an edge element (28) to an edge portion (6) of a panel (1) made of wood or similar materials comprising pressing means (44) for fixing said edge element (28) to a supporting element (8) and for inserting said supporting element (8) into seat means (7) of said edge portion (6), wherein said pressing means comprises a single pressing roller (44) for pressing said edge element (28) against said supporting element (8), inserting into said seat means (7) said supporting element (8) by pressing said supporting element against said panel (1) which acts as an abutment, and pressing said edge element (28) against said panel (1) which acts as an abutment so as to fix substantially simultaneously said edge element (28) to said supporting element (8) and said edge element (28) and said supporting element (8) to said panel (1), ***characterised in* that** there is provided cutting means (35, 36) for cutting to desired lengths said edge element (28) and said supporting element (8) so that an end wall (200, 200') of an end portion (49, 49') of said edge element (28) is staggered with respect to a further end wall (201, 201') of a further end portion (50, 50') of said supporting element (8) by a length (V2) substantially the same as a thickness (S1) of said edge element (28).

11. Apparatus according to claim 10, and comprising first gluing means (39) arranged for distributing an adhesive substance on said edge portion (6) and/or on said supporting element (8), or for activating a further adhesive substance that is on said supporting element (8).

12. Apparatus according to claim 10, or 11, and comprising second gluing means (37) arranged for distributing or activating a further adhesive substance that is on said edge element (28) and/or on said supporting element (8).

13. Apparatus according to claim 12, and comprising moving means (33, 34) arranged for moving said edge element (28) and said supporting element (8) along an advance direction (A) of said edge element (28) and of said supporting element (8) to said panel (1).

## Patentansprüche

1. Verfahren zum Kantenverbinden eines Paneels (1), das aus Holz oder ähnlichen Materialien hergestellt ist, umfassend ein Bearbeiten eines Kantenbereichs (6) des Paneels (1) um ein Aufnahmemittel (7) zu erhalten, Einführen in das Aufnahmemittel (7) ein Halteelement (8) über ein Pressen des Halteelements gegen das Paneel (1), das als eine Abstützung wirkt und Pressen eines Kantenelements (28) gegen das Halteelement (8), wobei dort ein immer noch Pressen des Kantenelements (28) gegen das Paneel (1) vorgesehen ist, das als eine Abstützung wirkt, um so im Wesentlichen gleichzeitig das Kantenelement (28) an dem Halteelement (8) zu befestigen und das Kantenelement (28) und das Halteelement (8) an dem Paneel (1), wobei das Einführen, das Pressen und das immer noch Pressen über eine Preßrolle (44) durchgeführt werden, wobei dort ein Schneiden des Halteelements (8) und des Kantenelements (28) auf gewünschte Längen vorgesehen ist, **dadurch gekennzeichnet, dass** das Schneiden auf gewünschte Längen ein Schneiden des Kantenelements (28) und des Halteelements (8) umfasst, so dass eine Endwand (200, 200') von einem Endbereich (49, 49') des Kantenelements (28) gestaffelt verläuft bezüglich einer weiteren Endwand (201, 201') von einem weiteren Endbereich (50, 50') des Halteelements (8) über eine Länge (V2), die im Wesentlichen die selbe ist, wie eine Stärke (S1) des Kantenelements (28).

2. Verfahren gemäß Anspruch 1, bei dem das Befestigen ein Kleben des Kantenelements (28) an das Halteelement (8) umfasst.

3. Verfahren gemäß einem der vorstehenden Ansprüche, bei dem das Einführen ein immer noch Kleben des Halteelements (8) an das Aufnahmemittel (7) umfasst.

4. Verfahren gemäß einem der vorstehenden Ansprüche, bei dem das Einführen weiter ein Kleben des Kantenelements (28) an das Paneel (1) umfasst.

5. Verfahren gemäß einem der vorstehenden Ansprüche, bei dem das Paneel ein mehrschichtiges Paneel (1) ist, wobei das mehrschichtige Paneel (1) eine mittlere Schicht (3) umfasst, die zwischen einer ersten Schicht (4) und einer zweiten Schicht (5) angeordnet ist, wobei die mittlere Schicht (3) aus einem leichteren Material als ein weiteres Material hergestellt ist, das für ein Herstellen der ersten Schicht (4) und der zweiten Schicht (5) verwendet wird.

6. Verfahren gemäß einem der vorstehenden Ansprüche, bei dem das Bearbeiten ein Fräsen des Kantenbereichs (6) umfasst.

7. Verfahren gemäß Anspruch 6, soweit Anspruch 6 von Anspruch 5 abhängig ist, bei dem das Fräsen des Kantenbereichs (6) ein Fräsen der ersten Schicht (4), der zweiten Schicht (5) und der mittleren Schicht (3) umfasst, so dass eine Bodenwand (12) des Aufnahmemittels (7) aus einer Endwand (45) der mittleren Schicht (3) besteht.

8. Verfahren gemäß Anspruch 6, soweit Anspruch 6 von Anspruch 5 abhängig ist, bei dem das Bearbeiten ein Komprimieren der mittleren Schicht (3) umfasst.

9. Verfahren gemäß einem der vorstehenden Ansprüche, bei dem das Schneiden auf gewünschte Längen ein immer noch Schneiden des Kantenelements (28) und des Halteelements (8) umfasst, so dass die Endwand (200, 200') gestaffelt verläuft bezüglich der weiteren Endwand (201, 201') über eine weitere Länge (V3), die im Wesentlichen die selbe ist, wie eine weitere Stärke (S2) des Halteelements (8).

10. Kantenzusammenbring-Vorrichtung zum Befestigen eines Kantenelements (28) an einem Kantenbereich (6) eines Paneels (1), das aus Holz oder ähnlichen Materialien hergestellt ist, umfassend ein Pressmittel (44) zum Befestigen des Kantenelements (28) an einem Halteelement (8) und zum Einführen des Halteelements (8) in das Aufnahmemittel (7) des Kantenbereichs (6), wobei das Pressmittel eine Einfachpressrolle (44) für ein Pressen des Kantenelements (28) gegen das Halteelement (8) umfasst, ein Einführen des Halteelements (8) in das Aufnahmemittel (7) über ein Pressen des Halteelements gegen das Paneel (1), das als Abstützung wirkt, und ein Pressen der Kantenelements (28) gegen das Paneel (1), das als eine Abstützung wirkt, um so im Wesentlichen gleichzeitig das Kantenelement (28) an dem Halteelement (8) zu befestigen und das Kantenelement (28) und das Halteelement (8) an dem Paneel (1), **dadurch gekennzeichnet, dass** ein Schneidemittel (35, 36) zum Schneiden des Kantenelements (28) und des Halteelements (8) auf gewünschte Längen, bereit gestellt ist, so dass eine Endwand (200, 200') von einem Endbereich (49, 49') des Kantenelements (28) gestaffelt verläuft bezüglich einer weiteren Endwand (201, 201') von einem weiterem Endbereich (50, 50') des Halteelements (8) über eine Länge (V2), die im Wesentlichen die selbe ist wie eine Stärke (S1) des Kantenelements (28).

11. Vorrichtung gemäß Anspruch 10 und umfassend ein erstes Klebemittel (39), das angeordnet ist für ein Verteilen einer haftenden Substanz auf dem Kantenbereich (6) und/oder auf dem Halteelement (8), oder für ein Aktivieren einer weiteren haftenden Substanz, die auf dem Halteelement (8) vorgesehen ist.

12. Vorrichtung gemäß Anspruch 10 oder 11 und umfassend ein zweites Klebemittel (37), das für ein Verteilen oder ein Aktivieren einer weiteren haftenden Substanz angeordnet ist, die sich auf dem Kantelement (28) und/oder auf dem Halteelement (8) befindet.

13. Vorrichtung gemäß Anspruch 12 und umfassend ein Bewegungsmittel (33, 34), das angeordnet ist für ein Bewegen des Kantenelements (28) und des Halteelements (8) entlang einer Förderrichtung (A) des Kantenelements (28) und des Halteelements (8) zu dem Paneel (1).

## Revendications

1. Procédé de placage d'une bande de chant sur un panneau (1) fait de bois ou de matériaux similaires, comprenant l'usinage d'une portion (6) de bordure dudit panneau (1) pour obtenir des moyens de siège (7), l'insertion dans lesdits moyens de siège (7) d'un élément de support (8) par pression dudit élément de support contre ledit panneau (1) qui sert de butée et la pression d'un élément de chant (28) contre ledit élément de support (8), procédé dans lequel il est prévu encore une pression dudit élément de chant (28) contre ledit panneau (1) qui sert de butée afin de fixer de manière sensiblement simultanée ledit élément de chant (28) audit élément de support (8), et ledit élément de chant (28) et ledit élément de support (8) audit panneau (1), ladite insertion, ladite pression et ladite autre pression étant effectuées par un galet presseur (44), dans lequel il est procédé à la coupe dudit élément de support (8) et dudit élément de chant (28) aux longueurs désirées, ***caractérisé en ce que*** ladite coupe aux longueurs désirées comprend la coupe dudit élément de chant (28) et dudit élément de support (8) de façon qu'une paroi d'extrémité (200, 200') d'une portion d'extrémité (49, 49') dudit élément de chant (28) soit décalée, par rapport à une autre paroi d'extrémité (201, 201'), d'une autre portion d'extrémité (50, 50') dudit élément de support (8), d'une longueur (V2) sensiblement identique à une épaisseur (S1) dudit élément de chant (28).

2. Procédé selon la revendication 1, dans lequel ladite fixation comprend le collage dudit élément de chant (28) sur ledit élément de support (8).

3. Procédé selon l'une quelconque des revendications précédentes, dans lequel ladite insertion comprend encore le collage dudit élément de support (8) sur lesdits moyens de siège (7).

4. Procédé selon l'une quelconque des revendications précédentes, dans lequel ladite insertion comprend le collage complémentaire dudit élément de chant (28) audit panneau (1).

5. Procédé selon l'une quelconque des revendications précédentes, dans lequel ledit panneau est un panneau multicouches (1), ledit panneau multicouches (1) comprenant une couche intermédiaire (3) interposée entre une première couche (4) et une deuxième couche (5), ladite couche intermédiaire (3) étant faite d'un matériau plus léger qu'un autre matériau utilisé pour réaliser ladite première couche (4) et ladite deuxième couche (5).

6. Procédé selon l'une quelconque des revendications précédentes, dans lequel ledit usinage comprend le fraisage de ladite portion de bordure (6).

7. Procédé selon la revendication 6, lorsque la revendication 6 est dépendante de la revendication 5, dans lequel ledit fraisage de ladite portion de bordure (6) comprend le fraisage de ladite première couche (4), de ladite deuxième couche (5) et de ladite couche intermédiaire (3), de façon qu'une paroi de fond (12) desdits moyens de siège (7) soit constituée d'une paroi d'extrémité (45) de ladite couche intermédiaire (3).

8. Procédé selon la revendication 6, lorsque la revendication 6 est dépendante de la revendication 5, dans lequel ledit usinage comprend la compression de ladite couche intermédiaire (3).

9. Procédé selon l'une quelconque des revendications précédentes, dans lequel ladite coupe à des longueurs désirées comprend encore la coupe dudit élément de chant (28) et dudit élément de support (8) de façon que ladite paroi d'extrémité (200, 200') soit décalée, par rapport à ladite autre paroi d'extrémité (201, 201'), d'une autre longueur (V3) qui soit sensiblement identique à une autre épaisseur (S2) dudit élément de support (8).

10. Dispositif de placage de chant destiné à fixer un élément de chant (28) à une portion (6) de bordure d'un panneau (1) fait de bois ou de matériaux similaires, comprenant des moyens de pression (44) pour fixer ledit élément de chant (28) à un élément de support (8) et pour insérer ledit élément de support (8) dans des moyens de siège (7) de ladite portion (6) de bordure, dans lequel lesdits moyens de pression comprennent un unique galet presseur (44) pour presser ledit élément de chant (28) contre ledit élément de support (8), pour insérer dans lesdits moyens de siège (7) ledit élément de support (8) par pression dudit élément de support contre ledit panneau (1) qui sert de butée, et pour presser ledit élément de chant (28) contre ledit panneau (1) qui sert de butée, afin de fixer de manière sensiblement simultanée ledit élément de chant (28) audit élément de support (8), et ledit élément de chant (28) et ledit élément de support (8) audit panneau (1), ***caractérisé en ce qu'**il* est prévu des moyens de coupe (35, 36) pour couper à des longueurs désirées ledit élément de chant (28) et ledit élément de support (8) de façon qu'une paroi d'extrémité (200, 200') d'une portion d'extrémité (49, 49') dudit élément de chant (28) soit décalée, par rapport à une autre paroi d'extrémité (201, 201') d'une autre portion d'extrémité (50, 50') dudit élément de support (8), d'une longueur (V2) sensiblement identique à une épaisseur (S1) dudit élément de chant (28).

11. Dispositif selon la revendication 10, et comprenant des premiers moyens d'encollage (39) agencés pour distribuer une substance adhésive sur ladite portion (6) de bordure et/ou sur ledit élément de support (8), ou pour activer une autre substance adhésive présente sur ledit élément de support (8).

12. Dispositif selon la revendication 10, ou 11, et comprenant des deuxièmes moyens d'encollage (37) agencés pour distribuer ou activer une autre substance adhésive présente sur ledit élément de chant (28) et/ou sur ledit élément de support (8).

13. Dispositif selon la revendication 12, et comprenant des moyens de déplacement (33, 34) agencés pour déplacer ledit élément de chant (28) et ledit élément de support (8), le long d'une direction de progression (A) dudit élément de chant (28) et dudit élément de support (8), vers ledit panneau (1).
